# EUROPEAN PATENT APPLICATION

(11) **EP 4 102 666 A1**
(43) Date of publication of application: **14.12.2022**
(21) Application number: 21177898.0
(22) Date of filing: 07.06.2021
(51) Int. Cl.: H02H 3/16, B60R 16/02, H02J 7/00

(54) **ELECTRONIC CONTROL UNIT FOR AUTOMOTIVE ELECTRONICS**

(71) Applicant: ZF CV Systems Global GmbH, 3006 Bern (CH)
(72) Inventor: HEDLOFF, Jacek, 55-010 Swieta Katarzyna (PL); MROZINSKA, Paulina, 44-373 Wodzislaw Slaski (PL); NOWAK, Adam, 51-215 Wroclaw (PL)
(74) Representative: Rabe, Dirk-Heinrich

(57) **Abstract**

The invention relates to an Electronic control unit (2) for automotive electronics with a protection circuit (15) to protect supply ground (16) of the control unit in the event of malfunction of the wiring harness (12) and connection with chassis ground (17). In order to protect the ground input (14) of an electronic control unit (2) from damage caused by ground shifts, the protection circuit (15) comprises a comparator (20) to supervise the voltage of supply ground (16) and to determine a disconnection of the supply ground (16) in the event of negative voltage on supply ground (16).

## Description

The invention relates to an Electronic control unit for automotive electronics with a protection circuit to protect supply ground of the control unit in the event of malfunction of the wiring harness and connection with chassis ground, according to claim 1.

An electronic control unit (ECU) is an embedded system in automotive electronics that controls one or more of the electrical systems or subsystems in a vehicle. Modern vehicles comprise a plurality of electronic control units for different tasks. Sometimes one assembly incorporates several of the individual control modules, for example engine and transmission. Next to microcontrollers, memories and embedded software, key elements of an ECU are the outputs, namely actuator outputs or logic outputs, and the inputs, namely data, supply voltage and ground. These electrical inputs as well as supply links, especially the wiring harness, are of special interest for the present invention.

Chassis ground may be understood as the electrical ground of the environment of the electrical components of the ECU or a housing of the ECU. Usually the ground supply of the ECU has a different voltage than chassis ground. Based on the wiring harness architecture inside a vehicle, ground shifts can occur between ECU supply ground and chassis ground. Ground shift is an accidental shift of the supply ground caused by electrical connection with the chassis. An ECU wiring harness failure (e.g.: abrasion of wire isolation and short to the chassis) would apply the chassis ground to the ECU ground input. The chassis ground level can destroy ECU ground inputs/output, because inverted current flow may occur.

It is an object of the present invention to provide a protection circuit that protects the ground input of an electronic control unit from damage caused by ground shifts.

This object is achieved by providing an electronic control unit with a protection circuit according to claim 1.

The protection circuit according to the invention prevents the ground input from negative voltage instantly as it occurs due to the event of a ground shift. A comparator supervises the supply ground or the ground line as a part of supply ground. The comparator compares two voltages, wherein one of those is the voltage in the ground line or ground supply respectively. Ground line may be understood as a part of the electrical ground supply, which is dedicated to the protection circuit and under the action of the protection circuit. The output signal of the comparator is either a "0" or a "1" and depends from the result of the comparison as a positive voltage or a negative voltage in the ground line. As soon as the comparator detects negative voltage in the ground line the corresponding output signal is used to determine a disconnection of the ground line from the ground input and the ground supply respectively.

The protection Circuit according to the invention is very fast and components of the ECU are protected as soon as negative voltages appear. The activation threshold for the negative voltage shift is adjusted as required.

Preferably the protection circuit comprises a transistor, which is switched as a function of the output signal of the comparator in the event of negative voltage on the supply ground or ground line. The combination of transistor and comparator provides a cost-efficient protection circuit with reliable protection from damage due to ground shift. As a further advantage the protection circuit automatically goes back to normal operation with specified hysteresis, as soon as the trigger conditions come back to normal operation.

In an advantageous embodiment of the invention the electronic control unit is dedicated to a vehicle's gearbox. In this embodiment the wiring harness of the electric control unit and often the ECU itself is arranged in the vicinity of the gearbox housing. Due to contact with components of the gearbox, which represent chassis ground, the wiring harness is exposed to abrasion and the probability of occurance of ground shifts is remarkable. By means of the protection circuit the ECU is protected from damage due to ground shift appearances.

In a preferred embodiment of the invention the transistor to switch off and disconnect ground line in case of negative voltage is a small signal transistor. This kind of transistor can be used for on / off switches for general use and provides fast reversion to normal operation including connection with ground supply of the ECU after detection of positive voltage in the ground line.

Further advantages and embodiments and developments are defined in the dependent claims. These and other aspects of the invention will be apparent from and elucidated with reference to the embodiments described hereafter with reference to the accompanying drawings, in which:
- Fig. 1: depicts a vehicle with an embodiment of an electronic control device according to the invention, which controls the gearbox of the vehicle,
- Fig. 2: depicts a simplified electric schedule of the protection circuit of the ECU according to fig. 1.

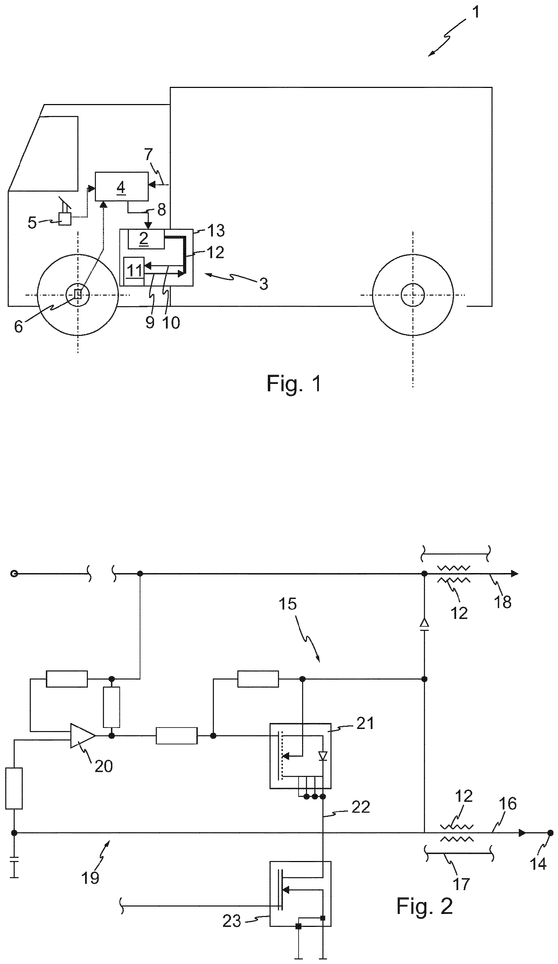

Fig. 1 depicts a vehicle 1 with several electronic control units for different control tasks. The electronic control unit with reference number 2 is dedicated to the gearbox 3 of the vehicle 1. The electric control unit 2 receives several input signals, for example manual gear selection, accelerator pedal and/or brake pedal, actual speed or other actual parameters. In the depicted embodiment the electronic control unit 2 is in communication with a central unit 4, which receives signals from pedals 5, wheel speed sensors 6 and even other information 7. Over the communication link 8, for example a CAN-bus, the electronic control unit 2 of the gearbox 3 receives its required input signals. The control unit 2 receives further input 9 from the components of the gearbox and sends control signals 10 as its output to the controlled actuators 11.

The electronic control unit 2 provides a wiring harness 12, which is disposed at least partially in the vicinity of the chassis 13 of the gearbox 3. The electronic control unit 2 features an electrical ground supply with a different voltage than electrical chassis ground, which is represented by the chassis 13. Based on the wiring harness 12 architecture inside the vehicle 1 and the gearbox 3, ground shifts can occur between ECU supply ground and chassis ground caused by abrasion of wire isolation short to the chassis 13, which may cause damage of the ground input 14 (fig. 2) of the electronic control unit 2.

Fig. 2 depicts an electrical circuit diagram of a protection circuit 15 to protect supply ground 16 of the control unit 2 and the associated ground input 14 in the event of malfunction of the wiring harness 12 and connection with chassis ground 17. In the depicted embodiment the wiring harness 12 isolates a supply ground 16 as well as a supply voltage 18 of the electronic control unit 2 from chassis ground 17.

In order to protect ground input 14 from damaging negative voltage caused by ground shift the protection circuit 15 is able to switch off the ground line 19, which is normally part of supply ground 12, and to disconnect ground line 19 from the ground input 14. The protection circuit 15 provides a comparator 20 to supervise the voltage of the ground line 19 and to determine a disconnection of the ground line 19 in the event of negative voltage on the ground line 19. The protection circuit 15 further comprises a transistor 21, which is switched by the output of the comparator 19 under trigger conditions, that means in the event of negative voltage on the ground line 19. In the event of negative voltage in the ground line 19 the disconnection is carried out by the transistor 21, which acts as a switch and disconnects ground line 19 as well as supply ground 16 from ground input 14. In the present embodiment according to fig. 2 the transistor 21 is a small signal transistor.

The protection circuit 15 automatically goes back to normal operation with specified hysteresis, as soon as the trigger conditions of the transistor 21 come back to normal operation. The drain 22 of the transistor 21 may be provided with a further transistor 23 or other switches or amplifiers according to the respective tasks.

### List of Reference numerals (part of the description)

- 1: Vehicle
- 2: Electronic control unit (ECU)
- 3: Gearbox
- 4: Central unit
- 5: Pedal
- 6: Wheel speed sensor
- 7: Information
- 8: Communication link
- 9: Input
- 10: Control signal
- 11: Actuator
- 12: Wiring harness
- 13: Chassis
- 14: Ground input
- 15: Protection circuit
- 16: Supply ground
- 17: Chassis ground
- 18: Supply voltage
- 19: Ground line
- 20: Comparator
- 21: Transistor
- 22: Drain
- 23: Further transistor

## Claims

1. Electronic control unit (2) for automotive electronics, with a wiring harness (12) which isolates supply ground (16) of the electronic control unit (2) from chassis ground (17), and with a protection circuit (15) to protect supply ground (16) and an associated ground input (14) of the electronic control unit (2) in the event of malfunction of the wiring harness (12) and connection with chassis ground (17), wherein the protection circuit (15) comprises a comparator (20) to supervise the voltage of supply ground (16) and to determine a disconnection of the supply ground (16) in the event of negative voltage on supply ground (16).

2. Electronic control unit according to claim 1, **characterized in that** the protection circuit (15) comprises a transistor (21), which is switched in the event of negative voltage on the supply ground (16).

3. Electronic control unit according to claim 1 or 2, **characterized in that** the assembly the electronic control unit (2) is dedicated to is a vehicle's gearbox (3).

4. Electronic control unit according to claim 2 or 3, **characterized in that** the transistor (21) is a small signal transistor.
